# EUROPÄISCHE PATENTSCHRIFT

(11) **EP 3 419 132 B1**
(45) Veröffentlichungstag und Bekanntmachung des Hinweises auf die Patenterteilung: **29.09.2021**
(21) Anmeldenummer: 17176536.5
(22) Anmeldetag: 19.06.2017
(51) Int. Cl.: H02G 3/22

(54) **KABELDURCHFÜHRUNG**
CABLE FEEDTHROUGH
PASSAGE DE CÂBLES

(43) Veröffentlichungstag der Anmeldung: 26.12.2018
(73) Patentinhaber: Bombardier Transportation GmbH, 10785 Berlin (DE)
(72) Erfinder: Corino, Nicola, 34134 Kassel (DE); Brunke, Volker, 34128 Kassel (DE); Löber, Mirko, 34246 Vellmar (DE)
(74) Vertreter: Patentanwälte Bressel und Partner mbB

(56) Entgegenhaltungen:
- EP-A1- 2 928 034
- EP-A2- 2 323 236
- EP-A2- 2 604 899
- DE-U1- 29 911 305
- JP-U- S53 127 258
- NL-A- 8 901 950
- US-A1- 2014 042 712

## Beschreibung

Die vorliegende Erfindung betrifft eine Kabeldurchführung oder einen Bausatz für eine Kabeldurchführung, einen Kabeldurchführungszusammenbau sowie ein Schienenfahrzeug aufweisend die Kabeldurchführung.

In Schienenfahrzeugen ist es bisweilen erforderlich, Kabel durch eine Wand durchzuführen. Beispielsweise werden bei Lokomotiven Kabel vom Untergestell außenseitig in einen Maschinenraum im Inneren geführt. Zur Durchführung von Kabeln durch eine Wand, oder auch einen Boden, sind sogenannte Kabeldurchführungen vorgesehen. Im einfachsten Fall handelt es sich hierbei um eine Lochplatte, die wiederum in einer Aussparung einer Wand oder eines Bodens befestigt wird. Durch ein Loch in dieser Lochplatte kann ein Kabel geführt werden. Das Loch ist so bemessen, dass nur das Kabel selbst, nicht aber Anschlusselemente, wie Stecker, durch das Loch hindurch geführt werden können. Daher können bei dieser Lösung Kabel nur einseitig vorkonfektioniert werden. D. h., an einem Ende des Kabels kann ein Stecker vorgesehen sein. Anschließend wird das Kabel mit der anderen Seite durch das Loch geführt und dann der zweite Stecker am anderen Ende des Kabels angebracht. Diese Verfahrensweise ist mühsam. Es wäre wünschenswert, zwecks rationeller Fertigung, vorkonfektionierte Kabel zu verwenden, bei denen an beiden Enden die Anschlusselemente bereits vorhanden sind. Dies ist umso wünschenswerter, weil in der Regel eine Vielzahl Kabel durch eine Kabeldurchführung geführt werden sollen. Zwar ist es möglich, bei einem Zuliefererbetrieb eine Vorkonfektionierung und Prüfung von Kabeln, die bereits durch eine Kabeldurchführung durchgeführt sind und bei denen Anschlusselemente bei beiden Seiten angebracht sind, zu erhalten. Dies ist aber eine technisch sehr unflexible Vorgehensweise, da von Fall zu Fall die Bestückung mit Kabeln nicht immer gleich ist, beispielsweise die Anzahl von Kabeln reduziert oder erhöht werden soll, oder andersartige Kabel eingesetzt werden sollen. Ferner erzeugt eine Vorkonfektionierung von mehreren Kabeln in eine einzige Kabeldurchführung bzw. Durchführungsplatte einen sehr hohen Dokumentationsaufwand und würde keine Serienfertigung beim Zulieferanten mehr bedeuten, da pro Variante ein neuer Dokumentationssatz zu erzeugen wäre.

Bekannt sind Kabeldurchführungen mit Kunststoffrahmen und Gummielementen. Solche Durchführungen sind beispielsweise beschrieben in der Patentanmeldung EP 2323236

A2. Diese Lösung bietet den Vorteil, dass sie flexibel ist. Allerdings sind bei der mechanischen Stabilität Abstriche hinzunehmen, ebenso wie beim Montageaufwand und Kosten durch direkte Befestigung des Steckers.

Die EP 2604899 A2 beschreibt einen Modulrahmen zu Montage wenigstens einer Leitungsdurchführung an einem Bauteil mit einer an dem Bauteil anbringenden Grundplatte, mehreren an der Grundplatte anzubringenden, nebeneinander angeordneten Flanschelementen, die jeweils ein Dichtungselement aufweisen, und einen zwischen der Grundplatte und den Flanschelementen angeordneten flachen, plattenförmigen Zwischenelement. Die Grundplatte, das Zwischenelement und die Flanschelemente weisen mehrere, an die Leitungsführungsdurchmesser angepasste Durchführungsausnehmungen auf. Hierbei handelt es sich um ein relativ komplex aufgebautes Kabeldurchführungselement. Eine andere Form der Kabeldurchführung wird auch in dem Dokument JPS53 127258U offenbart.

Eine Aufgabe der Erfindung bestand darin, für eines oder mehrere der oben bezeichneten Probleme eine Lösung anzugeben. Insbesondere sollte eine Kabeldurchführung geschaffen werden, bei der Kabel, welche an beiden Enden bereits Steckerelemente oder anderweitige Kontaktierungselemente aufweisen, eingesetzt werden können, ohne dass ein solches Kontaktierungselement abgenommen oder erst später angebracht werden muss, nachdem das Kabel durch die Kabeldurchführung durchgeführt wurde.

Gelöst wird das Problem mit einer Kabeldurchführung nach Anspruch 1. Vorteilhafte Varianten und Weiterbildungen davon sind in den Unteransprüchen angegeben.

Angegeben wird von der Erfindung somit eine Kabeldurchführung, oder ein Bausatz zum Zusammenbau einer solchen Kabeldurchführung, der alle in Anspruch 1 definierten Merkmale aufweist. Einige dieser Merkmale sind
- eine erste Platte, aufweisend zumindest einen ersten Außenrandabschnitt,
- zumindest eine zweite Platte, aufweisend einen zweiten Außenrandabschnitt,

wobei die erste und/oder die zweite Platte an ihrem Außenrandabschnitt zumindest eine erste Ausbuchtung aufweist,
wobei die erste Platte und die zweite Platte an dem ersten und dem zweiten Außenrandabschnitt aneinander stoßend so zusammensetzbar oder zusammengesetzt sind, dass durch die Ausbuchtung ein Loch gebildet wird oder ist,
wobei
die erste Platte ein erstes Richtelement aufweist, welches bei dem Zusammensetzen der ersten und der zweiten Platte derart mit der zweiten Platte zusammen wirkt, dass die erste Platte und die zweite Platte zumindest in einem das Loch umgebenden Bereich einen ebenen Lochrandbereich bilden.

Das Loch oder der ebene Lochrandbereich weist vorzugsweise fluchtende Lochkanten auf.

Die erfindungsgemäße Kabeldurchführung ermöglicht eine beidseitige Vorkonfektionierung der Kabel.

Das Loch kann zur Durchführung eines Kabels, zur Anbringung einer Kabelbefestigung, insbesondere zur Befestigung einer Kabelverschraubung, und/oder für eine Verschraubung eines Schutzschlauches für das Kabel, verwendet werden.

Mit der Erfindung wird auch eine saubere Endbefestigung eines Kabelschutzschlauches ermöglicht.

Die erfindungsgemäße Lösung ermöglicht somit eine Arbeitsverlagerung von der Endmontage hin zur Vormontage, mit dem Vorteil einer erhöhten Ergonomie und einer Durchlaufzeitverringerung bei der Produktion.

Ermöglicht wird ferner eine Prüfung der Kabel mit allen Steckern, aufgrund der möglichen Vorkonfektionierung, wodurch die Produktionssicherheit erhöht wird.

Ferner ermöglicht die Erfindung, eine Berücksichtigung verschiedener Loktypen und -varianten, sofern sie in Lokomotiven eingesetzt werden soll, und eine Erhöhung des Standardisierungsgrades.

Bei der erfindungsgemäßen Kabeldurchführung ist es möglich, ein Kabel beim Zusammenbau in die erste Ausbuchtung einzulegen und dann die andere Platte, welche die Ausbuchtung nicht aufweist, aber eine Ausbuchtung aufweisen kann, wie nachfolgend noch beschrieben, die Platte mit der Ausbuchtung anzusetzen. Nach diesem Zusammenbau wird das Kabel von der Kabeldurchführung umfasst. Anschließend kann die Kabeldurchführung beispielsweise in ein Schienenfahrzeug eingebaut werden.

Von einem Bausatz für eine Kabeldurchführung kann dann gesprochen werden, wenn die erwähnte erste Platte und zweite Platte noch nicht zusammengebaut sind. In diesem Sinne stellt der Bausatz für die Kabeldurchführung einen eigenständigen Erfindungsgegenstand dar.

Das erwähnte Loch dient zur Durchführung und gegebenenfalls auch Befestigung des Kabels. Alternativ oder zusätzlich kann auf einer Seite des Loches, oder auf beiden Seiten, mit geeigneten Verbindungsmitteln ein Schutzschlauch angebracht werden. Der Schutzschlauch dient zum mechanischen Schutz des Kabels gegen Einwirkung von außen, insbesondere auf der Seite des Unterbodens eines Schienenfahrzeuges.

Der Begriff "Platte" bedeutet, dass das so bezeichnete Element zumindest einen plattenförmigen Bereich aufweist, vorzugsweise überwiegend aus einem solchen plattenförmigen Bereich gebildet ist. Insbesondere kann durch das Zusammenfügen plattenförmiger Bereiche der Platte, ein ebener Lochrandbereich gebildet werden. Ein Lochrandbereich ist ein Bereich, der das Loch umgibt, insbesondere ringförmig oder rahmenförmig umgibt. Der Lochrandbereich ist ein planer Bereich und insbesondere zum Anbringen oder Auflegen eines Verbindungs- oder Befestigungsmittels oder eines elektrischen Kontaktierungselements geeignet, welche(s) eine plane oder ebene Oberfläche aufweist, die an den ebenen Lochrandbereich bündig anlegbar ist. Ein ebener Lochrandbereich bedeutet, dass das Loch und der Randbereich in einer Ebene liegen, insbesondere keine Knicke, Krümmungen, Erhebungen, Vertiefungen, etc. aufweisen.

Unter einem Richtelement ist erfindungsgemäß ein Element zu verstehen, das dazu geeignet ist, die erste Platte und die zweite Platte in einer definierten Lage relativ zueinander zu bringen. Das Richtelement ist also dazu geeignet, die erste und die zweite Platte relativ zueinander auszurichten. Mit dem erwähnten ersten Richtelement wird eine Ausrichtung derart erreicht, dass die erste Platte und die zweite Platte einen ebenen Lochrandbereich bilden, wenn sie mit den erwähnten Außenrandabschnitten aneinanderstoßend zusammengesetzt sind. Insbesondere kann die zweite Platte an das Richtelement der ersten Platte angelegt oder aufgelegt werden, sodass sich der ebene Lochrandbereich einstellt.

Das Loch wird von der Ausbuchtung in einer der Platten sowie der zweiten Platte gebildet, wenn die erste und die zweite Platte zusammengesetzt werden. Das Loch wird dann von der ersten Ausbuchtung sowie einem Randabschnitt der anderen Platte umgrenzt. Dieser Randabschnitt kann ein Teil eines erwähnten Außenrandabschnittes sein.

In einer Ausführungsform ist es vorgesehen, dass diejenige Platte, welche nicht die erste Ausbuchtung aufweist (Also die erste Platte, wenn die zweite Platte die erste Ausbuchtung aufweist. Oder die zweite Platte, wenn die erste Platte die erste Ausbuchtung aufweist), an ihrem Außenrand eine zweite Ausbuchtung aufweist, also ebenfalls eine Ausbuchtung aufweist, wobei die erste Ausbuchtung und die zweite Ausbuchtung sich zu einem Loch ergänzen, wenn die erste Platte und die zweite Platte zusammengesetzt sind. In dieser Ausführungsform ergänzen sich beide Ausbuchtungen zu einem Loch, welches vorzugsweise einen versatzfreien Rand aufweist. Beispielsweise können sich die erste Ausbuchtung und die zweite Ausbuchtung zu einem Kreis, einem Rechteck oder einer beliebigen anderen geometrischen Form ergänzen. Ergänzen sich beide erwähnten Ausbuchtungen zu einem Kreis, sind beide Ausbuchtungen vorzugsweise halbkreisförmig. Die genaue Ausrichtung der ersten Ausbuchtung zu der zweiten Ausbuchtung kann mithilfe eines dieser Beschreibung beschriebenen Richtelements hergestellt werden, insbesondere mit einem nachfolgend noch erwähnten zweiten und dritten Richtelement.

Ein Richtelement kann ferner die Funktion eines Verbindungselements aufweisen, also Richt- und Verbindungselement sein, oder an einer Verbindung zwischen der ersten Platte und der zweiten Platte mitwirken. Insbesondere kann mit einem Richtelement, oder unter Beteiligung eines Richtelements auch eine formschlüssige Verbindung ausgebildet werden.

Die erste Platte weist zumindest eine zu ihrer Plattenebene parallel versetzte erste Lasche als erstes Richtelement auf, die neben dem ersten Außenrandabschnitt der ersten Platte angesetzt oder ausgeformt ist, wobei die erste Platte und die zweite Platte an der Lasche überlappend aneinander legbar oder aneinander gelegt sind. Insbesondere grenzt die erste Lasche an den ersten Außenrandabschnitt an. Die Lasche bildet auf einer Seite eine Auflagefläche oder weist eine solche Auflagefläche auf, auf die die zweite Platte aufgelegt werden kann. Durch den Parallelversatz wird erreicht, dass danach die erste Platte und die zweite Platte in einer gemeinsamen Ebene liegen und ein ebener Lochrandbereich gebildet wird.

In einer Weiterbildung der Erfindung weist die erste Platte noch eine zweite Lasche auf, die ebenfalls ein erstes Richtelement ist, und die neben dem ersten Außenrandabschnitte der ersten Platte angesetzt oder ausgeformt ist, sodass sich der erste Außenrandabschnitt zwischen der ersten Lasche und der zweiten Lasche erstreckt. Das Loch und der Lochrandbereich sind zwischen den beiden Laschen angeordnet, wenn die erste und die zweite Platte zusammengesetzt sind. Die erste und die zweite Lasche können somit den ersten Außenrandabschnitt der ersten Platte begrenzen. Für die zweite Lasche gilt vorzugsweise das gleiche wie für die erste Lasche. Auch sie weist vorzugsweise eine Auflagefläche auf, auf welche die zweite Platte legbar ist. Durch ein Auflegen der zweiten Platte auf die erste Lasche, und gegebenenfalls die zweite Lasche, wird eine Ausrichtung der Platten relativ zueinander erzielt.

Es versteht sich, dass erfindungsgemäß mehr als eine erwähnte Ausbuchtung, mehr als ein erwähntes Loch und noch weitere Laschen in beliebiger Anordnung vorhanden sein können.

Die Nummerierung von Elementen in der vorliegenden Erfindung, wie "erste", in "zweite usw. dient dazu, ansonsten gleichnamige Elemente voneinander zu unterscheiden. Sofern nicht explizit anders angegeben, stellt diese Nummerierung keine strukturelle Beschränkung dar. Und es ist möglich, Elemente auch anders zu nummerieren, um sie voneinander abzugrenzen. So ist es beispielsweise möglich, dass die zweite Platte eine oder mehrere erwähnte Laschen aufweist und die erste Platte nicht. In diesem Fall wäre lediglich eine Umnummerierung vorgenommen worden.

In einer speziellen Ausführungsform der Erfindung weisen die Kabeldurchführung oder der Bausatz hierfür auf
- eine erste Platte, aufweisend zwei erste Außenrandabschnitte
- zwei zweite Platten, aufweisend jeweils einen zweiten Außenrandabschnitt,
und weiterhin aufweisend eines oder mehrere der vorangehend genannten Merkmale und/oder Funktionen.

Es ist in dieser Ausführungsform insbesondere vorgesehen, dass die beiden ersten Außenrandabschnitte einander gegenüber liegen und an jeden Außenrandabschnitt jeweils eine zweite Platte mit dem zweiten Außenrandabschnitt angesetzt werden kann, sodass beidseitig ein erster Außenrandabschnitt und ein zweiter Außenrandabschnitt aneinander stoßen.

Ferner kann die erste Platte beidseitig jeweils neben dem ersten Außenrandabschnitt auf der einen Seite und neben dem ersten Au ßenrandabschnitt auf der gegenüberliegenden Seite, zumindest eine erwähnte Lasche, vorzugsweise zwei Laschen aufweisen.

Erfindungsgemäss weist eine zuvor beschriebene Lasche, oder mehrere der Laschen, ein zweites Richtelement auf, welches mit einem dritten Richtelement, das an der zweiten Platte ausgebildet ist, zusammen wirkt. Das zweite und das dritte Richtelement können so ausgebildet sein, dass sie ineinandergreifen, insbesondere in formschlüssiger Verbindung. Hierdurch kann erreicht werden, dass die erste Platte und die zweite Platte nach dem Zusammensetzen nicht gegeneinander in der gemeinsam gebildeten Ebene verrutschen. Insbesondere kann erreicht werden, dass zwei ineinander anschließende zusammen ein Loch bildende Ausbuchtungen nicht gegeneinander verrutschen. Es kann erreicht werden, dass beide Ausbuchtungen in eine erwünschte Lage relativ zueinander gebracht und in dieser Lage gehalten werden.

Erfindungsgemäss wird eine Kabeldurchführung angegeben, wobei
das zweite Richtelement aus der Lasche zu einer ersten Seite der Lasche, hervorsteht, an welche die zweite Platte an die Lasche angelegt wird, und welches in eine Vertiefung oder in ein Loch eingreift, welche(s) in der zweiten Platte als drittes Richtelement gebildet ist, oder
wobei das dritte Richtelement aus der zweiten Platte zu einer Seite der zweiten Platte, hervorsteht, an welche die zweite Platte an die Lasche angelegt wird, und welches in eine Vertiefung oder in ein Loch eingreift, welche(s) in der Lasche als zweites Richtelement gebildet ist.

In einer Weiterbildung der vorangehenden Ausführungsform ist vorgesehen, dass der Längenbetrag, um den das zweite Richtelement aus der Lasche, oder aus der zweiten Platte, hervorsteht, kleiner oder gleich ist wie die Dicke der zweiten Platte, oder der Lasche.

Hiermit wird erreicht, dass das zweite Richtelement nicht über die zweite Platte hervor steht, wenn es in ein Loch in der zweiten Platte eingreift, oder nicht aus der Lasche hervor steht, wenn es in ein Loch in der Lasche eingreift. Dies ist vorteilhaft, wenn der Zusammenbau aus erster und zweiter Platte anschließend auf einen ebenen Untergrund aufgeschraubt werden soll, wenn die Kabeldurchführung in ein Schienenfahrzeug eingebaut wird.

Das zweite Richtelement ist eine an der Lasche oder an der zweiten Platte befestigte Blindnietmutter oder Gewindehülse. Diese Blindnietmutter oder Gewindehülse kann bei seitlicher Betrachtung, quer zur Ebene der Platten nach dem Zusammensetzen der Kabeldurchführung über die Kabeldurchführung hervor stehen. Mit der Blindnietmutter oder Gewindehülse kann zum einen die Kabeldurchführung an einem Schienenfahrzeug befestigt werden und hierbei kann gleichzeitig erreicht werden, dass die erste Platte und die zweite Platte aneinander fixiert werden. Dies wird in beiliegenden Ausführungsbeispiele näher erläutert.

In einer Ausführungsform weist die erste und/oder die zweite Platte einer als Knick in der Platte ausgeformte Versteifung auf.

In einem weiteren Aspekt betrifft die vorliegende Erfindung einen Zusammenbau einer Kabeldurchführung , aufweisend, eine Kabeldurchführung wie vorangehend angegeben und ein Kabel, das in das Loch der Kabeldurchführung geführt ist und mit einem Befestigungsmittel, welches an dem ebenen Lochrandbereich anliegt, an der Kabeldurchführung befestigt ist.

Mit der Befestigung kann erreicht werden, dass das Kabel nicht in der Kabeldurchführung rutscht und sie als Zugentlastung, Schutzschlauchbefestigung und/oder Knickschutz genutzt werden kann. Das Kabel weist vorzugsweise an beiden Enden ein Element zur Herstellung einer elektrischen und/oder mechanischen Verbindung auf, beispielsweise einen Stecker.

In noch einem Aspekt betrifft die Erfindung ein Schienenfahrzeug, aufweisend, eine vorangehend beschriebene Kabeldurchführung oder einen vorangehend beschriebenen Zusammenbau. Das Schienenfahrzeug kann ausgewählt sein. Aus einer Lokomotive, einer Straßenbahn, einer U-Bahn, einem Zugverbund, einer S-Bahn, ohne darauf beschränkt zu sein, wobei ein besonders bevorzugtes Schienenfahrzeug eine Lokomotive ist.

Die Kabeldurchführung, die in dem Schienenfahrzeug verbaut ist, weist in einer vorteilhaften Variante als Richtelement eine erwähnte Blindnietmutter oder Gewindehülse auf. Mithilfe einer Verschraubung ist die Kabeldurchführung über die Blindnietmutter oder die Gewindehülse an dem Schienenfahrzeug befestigt und neben einer Befestigung wird auch gleichzeitig eine Verschraubung der ersten Platte und der zweiten Platte aneinander und eine Fixierung der beiden Platten aneinander erreicht.

In noch einem weiteren Aspekt betrifft die Erfindung ein Verfahren, bestehend aus den in Anspruch 9 definierten Schritten.

In dem Verfahren kann jedes gegenständliche Element, in beliebiger Kombination mit anderen Elementen, verwendet werden, dass zuvor anhand einer erfindungsgemäßen Kabeldurchführung oder anhand eines Zusammenbaus beschrieben wurde. Ebenfalls können in dem Verfahren zuvor bereits beschriebene funktionelle oder verfahrensmäßig formulierte Merkmale angewandt werden.

Nachfolgend wird die Erfindung anhand von Ausführungsbeispielen beschrieben. Es zeigen:
- Fig. 1: Kabeldurchführungen nach dem Stand der Technik;
- Fig. 2: eine erfindungsgemäße Kabeldurchführung;
- Fig. 3: eine erfindungsgemäße Kabeldurchführung in seitlicher Ansicht;
- Fig. 4: Einen Ausschnitt einer erfindungsgemäßen Kabeldurchführung in perspektivischer Ansicht;
- Fig. 5: eine erfindungsgemäße Kabeldurchführung im eingebauten Zustand in einer ersten Ansicht;
- Fig. 6: eine erfindungsgemäße Kabeldurchführung im eingebauten Zustand in einer zweiten Ansicht;
- Fig. 7: eine weitere Ausführungsform einer erfindungsgemäßen Kabeldurchführung im eingebauten Zustand in einer ersten Ansicht;
- Fig. 8: eine weitere Ausführungsform einer erfindungsgemäßen Kabeldurchführung im eingebauten Zustand in einer zweiten Ansicht;
- Fig. 9: eine Detailansicht eines Zusammenbau aus einer erfindungsgemäßen Kabeldurchführung und einem Steckergehäuse.

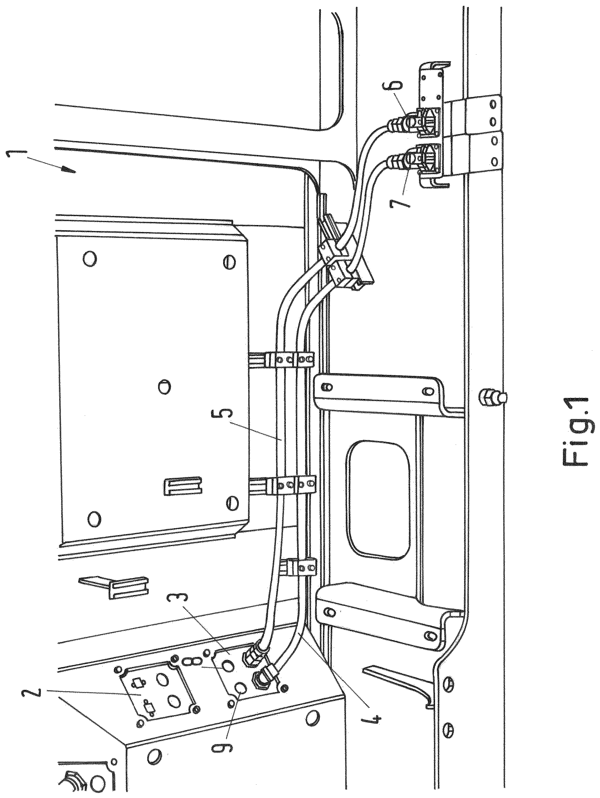

Fig. 1 zeigte den Boden 1 einer Lokomotive. Der Blick fällt von unten auf den Boden bzw. auf den Unterbau der Lokomotive. In dem Boden 1 sind zwei Kabeldurchführungen 2, 3 zu sehen, die jeweils vier Löcher 8, 9 aufweisen. Die Kabeldurchführungen 2, 3 sind als einfache einstückige Metallplatten realisiert. Auf der Seite des Untergestells werden die Kabel in einem Schutzschlauch 4, 5 bis zum Stecker hin geschützt. Auf der Platte sind die erwähnten Löcher zur Befestigung der Verschraubung vorgesehen, damit der Schlauch einen festen und vor allem dichten Fixpunkt erhält. Die Löcher 8, 9 zur Fixierung der Schlauchverschraubung sind kleiner als die Stecker 6, 7 im Untergestell. Dies bedeutet, dass das Kabel erst durch die Kabeldurchführung geführt werden muss, und erst dann kann der Stecker 6 oder 7 angeschlossen werden.

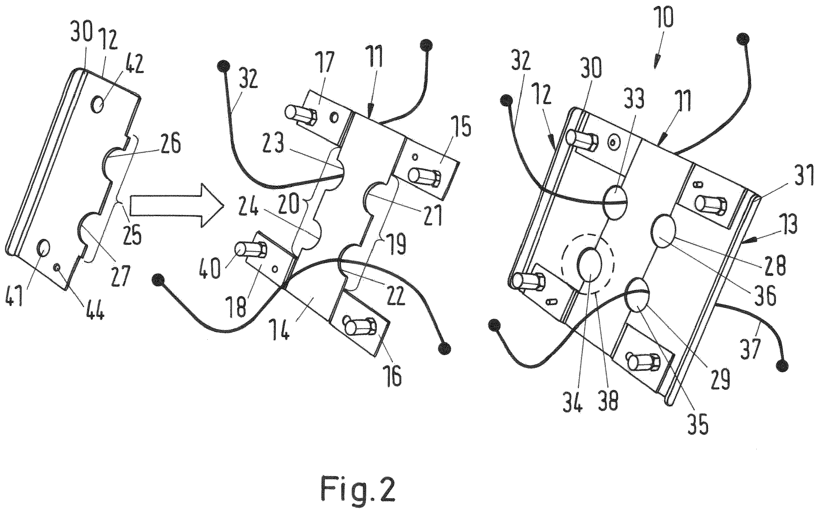

Fig. 2 zeigt die erfindungsgemäße Lösung, die auf dem Konzept eines Klemmhälftenpaares beruht. Die Bohrungen bzw. Löcher für die Kabelführungen sind hierbei in zwei Hälften getrennt. Die erfindungsgemäße Kabeldurchführung 10 weist die erste Platte 11 und die beiden zweiten Platten 12, 13 auf. Die erste Platte 11 weist den ebenen Mittelteil 14 sowie die daran angesetzten Laschen 15, 16, 17, 18 auf. An dem ebenen Mittelteil 14 weist die erste Platte 11 den ersten Außenrandabschnitt 19 und den ersten Außenrandabschnitt 20 auf. Die Außenrandabschnitte an der ersten Platte werden beide als "erste Außenrandabschnitte" bezeichnet. In dem ersten Außenrandabschnitt 19 und dem ersten Außenrandabschnitt 20 sind jeweils zwei erste Ausbuchtungen 21, 22, 23, 24 vorgesehen.

Die zweite Platte 12 weist den zweiten Außenrandabschnitt 25 auf, der die zweiten Ausbuchtungen 26, 27 aufweist. In analoger Weise weist die zweite Platte 13 die zweiten Ausbuchtungen 28, 29 auf. Sowohl die zweite Platte 12 wie auch die andere zweite Platte 13 weisen jeweils eine Abkantung 30, 31 zur Versteifung auf.

Rechts in Fig. 2 ist der Zusammenbau aus der zweiten Platte 12 und der ersten Platte 11 gezeigt. Die zweite Platte 12 wird an die Laschen 17, 18 angelegt, sodass der zweite Außenrandabschnitt 25 und der erste Außenrandabschnitt 20 aneinander stoßen. Zuvor wird das schematisch gezeigte Kabel 32 in die Ausbuchtung 23 am Mittelteil 14 der ersten Platte 11 eingelegt. Durch das Zusammensetzen der ersten Platte 11 und der zweiten Platte 12 werden die Löcher 33, 34 gebildet, wobei das Kabel 32 durch das Loch 33 läuft. Die Löcher 33, 34 sind jeweils von einem ebenen Lochrandbereich 38 umgeben, der anhand des Loches 34 gestrichelt dargestellt ist, der aber bei allen anderen Löchern ebenso vorhanden ist. Durch das Anlegen der zweiten Platte 12 an die Laschen 17, 18 werden die erste Platte 11 und die zweite Platte 12 so zueinander ausgerichtet, dass der ebene Lochrandbereich 38 gebildet wird und Deckungsgleichheit der jeweiligen Ausbuchtungen erreicht wird. Somit sind die Laschen 17, 18 wie auch die Laschen 15, 16 Richtelemente. Das Zusammensetzen der zweiten Platte 13 mit der ersten Platte 11 erfolgt in analoger Art und Weise, wobei die Löcher 35, 36 gebildet werden. Durch das Loch 35 ist das Kabel 37 geführt.

Wie aus dem Zusammenbauprinzip der Fig. 2 ersichtlich, können die Kabel 32, 37 bereits an ihren Enden mit Steckern versehen sein, die in dieser Figur nur angedeutet sind, und die einen größeren Durchmesser aufweisen können als der Durchmesser der resultierenden Löcher 33, 34, 35, 36.

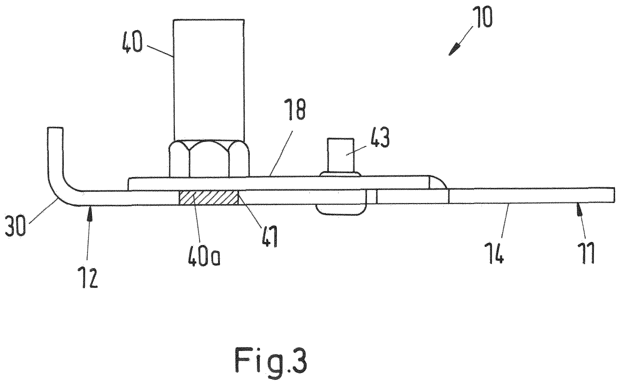

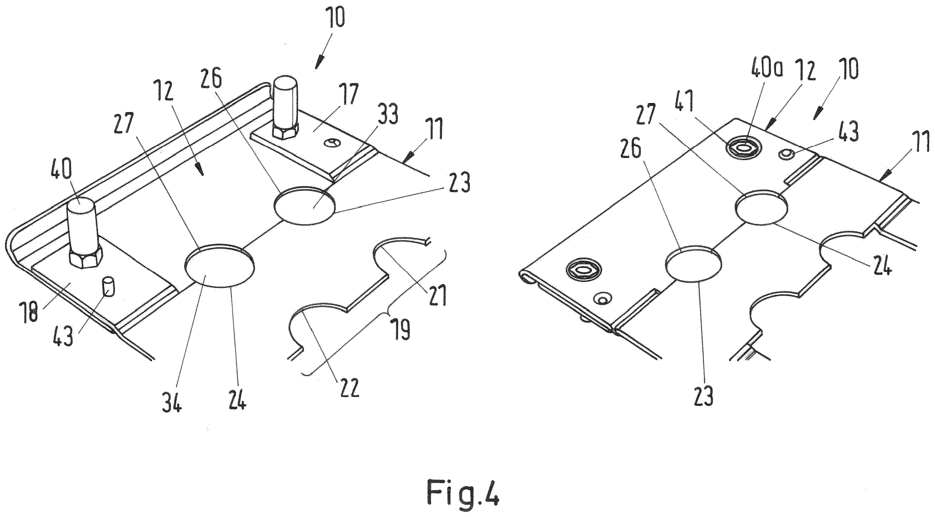

Weitere Details sind in Fig. 3 gezeigt. Fig. 3 zeigt einen Ausschnitt der Kabeldurchführung 10, die bereits in Fig. 2 gezeigt ist. Auf die Lasche 18 ist eine Blindnietmutter 40 aufgesetzt, die auch bereits mit drei weiteren Blindnietmuttern (ohne Bezugszeichen) an weiteren Laschen, in Fig. 2 gezeigt ist (Die Menge der Befestigungselemente kann je nach Größe der Kabeldurchführung variieren). In Fig. 2 sind in der zweiten Platte 12 zwei Löcher 41, 42 gezeigt. Die Blindnietmutter 40 weist einen Fortsatz 40a (Fig. 4) (schraffiert) auf, der nach unten, d. h. in Richtung der zweiten Platte 12 über die Lasche 18 hervor steht und in das Loch 41 der zweiten Platte 12 eingreift. Hierdurch wird eine weitere Ausrichtung zwischen der ersten Platte 11 und der zweiten Platte 12 erzielt. Die Blindnietmutter 40 stellt zusammen mit dem Fortsatz 40a ein zweites Richtelement dar, das an der Lasche 18 angebracht ist und mit dem dritten Richtelement in Form eines Loches 41 in der zweiten Platte 12 zusammen wirkt.

Fig. 3 zeigt ferner noch ein weiteres Richtelement in Form eines Niets 43, der in ein Loch 44 (siehe Fig. 2) in der zweiten Platte 12 eingreift. Ein solcher Niet, oder ein anderweitiges Befestigungselement kann, muss aber keine Verwendung finden.

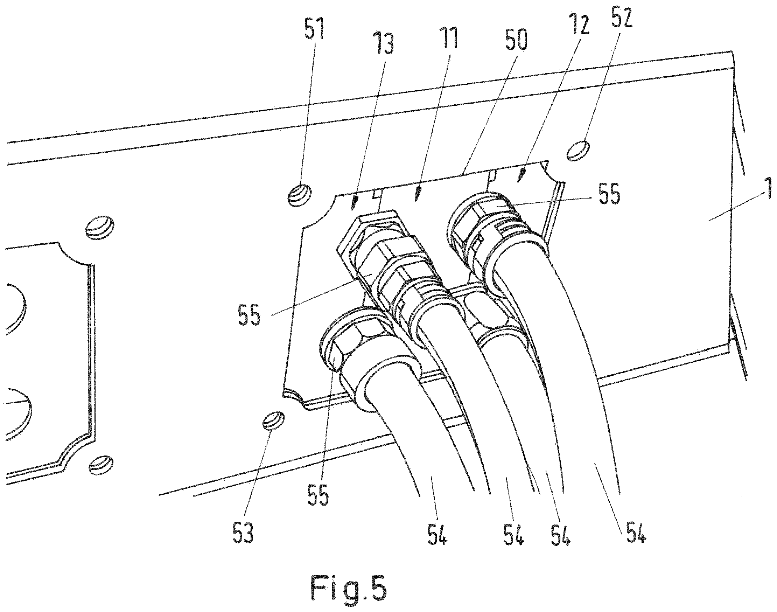

Fig. 4 zeigt einen Ausschnitt aus der zusammengebauten Kabeldurchführung 10, die in Fig. 2 rechts gezeigt ist. Rechts in Fig. 4 ist die Kabeldurchführung 10 von der Unterseite dargestellt. Man sieht, wie der Fortsatz 40a in das Loch 41 in der zweiten Platte 12 eingreift. Die Blindnietmutter 40 und weitere Blindnietmuttern dienen zur Befestigung am Schienenfahrzeug, wie nachfolgend in Fig. 5 dargestellt.

Fig. 5 zeigt die gleiche Seite der Kabeldurchführung 10 wie Fig. 4, rechts. Die Kabeldurchführung 10 ist an den Boden 1 im Bereich einer Öffnung 50 des Bodens angeschraubt. Zum Anschrauben weist der Boden 1 die Löcher 51, 52, 53 (und ein verdecktes weiteres Loch) auf. Die Schrauben selbst sind hier nicht gezeigt, werden aber durch die Löcher 51, 52, 53 und das nicht gezeigte weitere, vierte Loch geführt und in die Blindnietmuttern (u.a. Blindnietmutter 40), die an den Laschen 15, 16, 17, 18 (siehe Fig. 2) vorgesehen sind, eingedreht. Dadurch werden zum einen die zweiten Platten 12, 13 an der ersten Platte 11 befestigt und zum anderen wird die gesamte Kabeldurchführung 10 an dem Unterbau 1 befestigt.

Durch die Löcher der Kabeldurchführung 10 in Fig. 5 sind Kabel geführt, die auf der Seite des Unterbaus mit Schutzschläuchen 54 ummantelt sind. Die Schutzschläuche 54 sind mit Kabelverschraubungen 55, die an ebenen Lochrandbereichen der Kabeldurchführung 10 anliegen, an der Kabeldurchführung 10 befestigt. Durch das Innere der Schutzschläuche 54 verlaufen die Kabel.

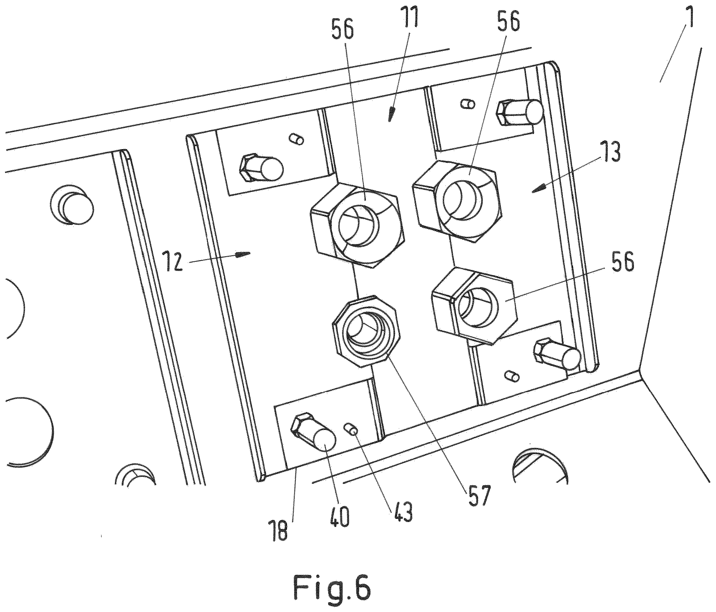

Fig. 6 zeigt den Zusammenbau der Fig. 5 von der anderen Seite. Auf dieser Seite liegen an den ebenen Lochrandbereichen Knickschutzmuttern 56 an, sowie eine einfache, flachere Mutter 57 durch die Knickschutzmuttern 56 sowie die Mutter 57 sind hier nicht gezeigte Kabel geführt.

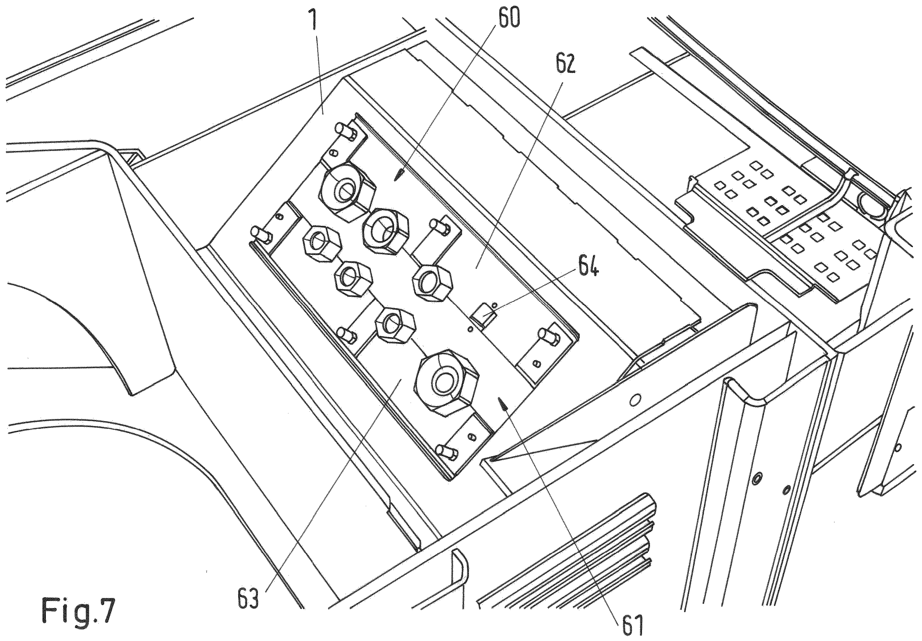

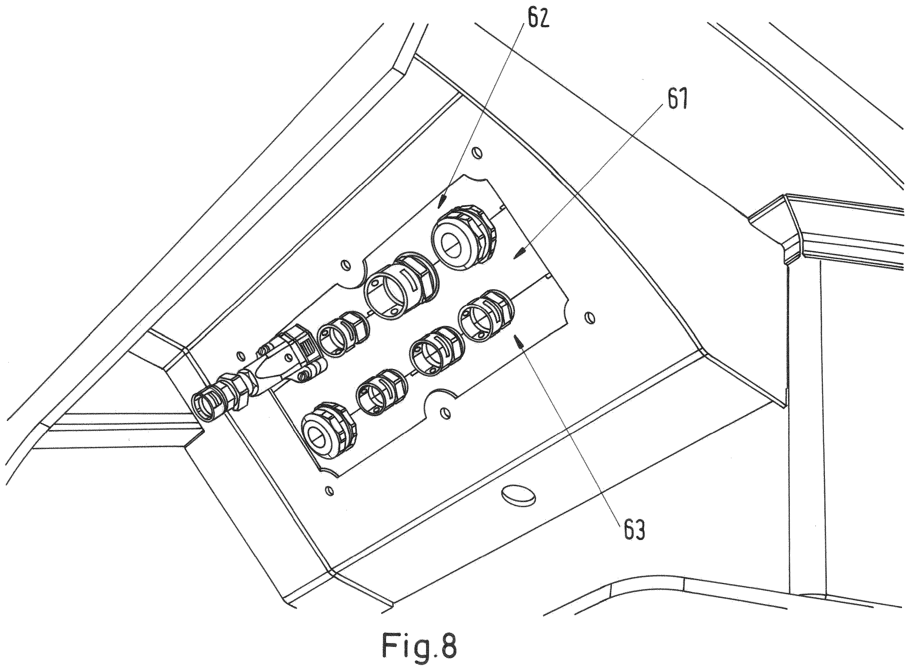

Fig. 7 zeigt eine weitere Ausführungsform einer Kabeldurchführung 60. Die Kabeldurchführung 60 ist eine erweiterte Variante, wobei die erste Platte 61 sechs Laschen aufweist und insgesamt acht Löcher zur Durchführung von Kabeln vorhanden sind. Die zweiten Platten sind mit den Ziffern 62, 63 bezeichnet. Die Rückseite des Aufbaus aus Fig. 7 ist in Fig. 8 gezeigt.

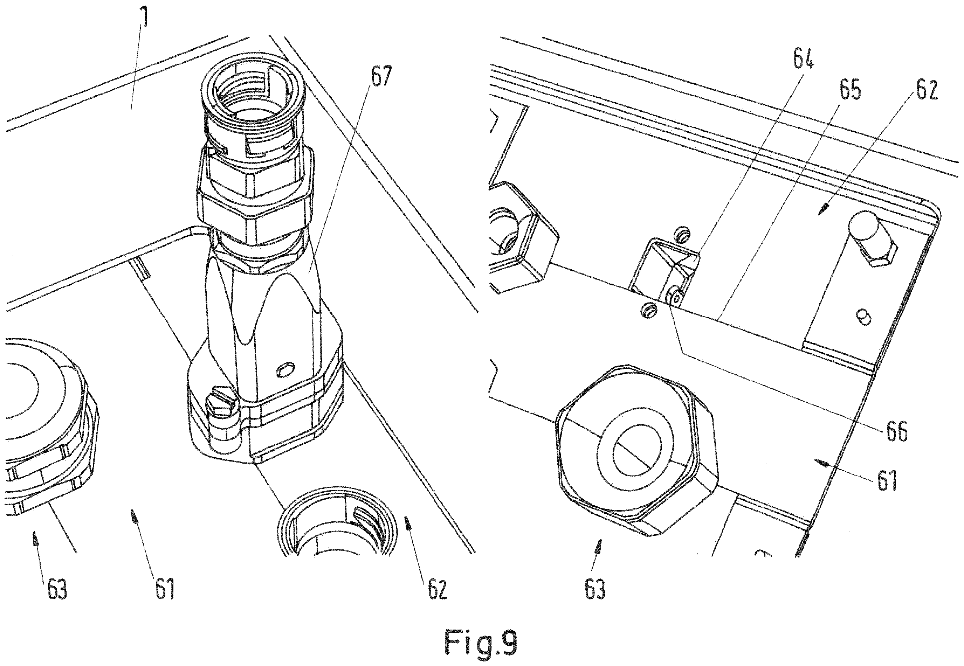

Die Ausführungsform der Fig. 7 zeigt ein Loch 64 in der Kabeldurchführung 60, das nur durch eine einseitige Aussparung 64 gebildet ist, d.h. durch eine Aussparung nur in der zweiten Platte 62. Fig. 9 zeigt dies im Detail. Die Aussparung 64 ist an dem zweiten Außenrandabschnitt 65 der zweiten Platte 62 vorgesehen. Im Übrigen wird das Loch durch einen Teil des ersten Außenrandabschnittes 66 gebildet. In der zuvor gezeigten Ausführungsform einer Kabeldurchführung 10 sind die dortigen Löcher 33, 34, 35, 36 im Gegensatz dazu jeweils durch zwei Aussparungen gebildet, von denen eine Aussparung in der ersten Platte vorgesehen ist und eine weitere Aussparung in der zweiten Platte. Beispielsweise bilden die Aussparungen 24 und 27 das Loch 34 (Fig. 4). Im linken Teil der Fig. 9 ist die Rückseite des Aufbaus gezeigt. Dargestellt ist ein Steckergehäuse 67, das direkt mit der Kabeldurchführung 60 verschraubt ist.

### Bezugszeichenliste

- 1: Boden
- 2: Kabeldurchführung
- 3: Kabeldurchführung
- 4: Schutzschlauch
- 5: Schutzschlauch
- 6: Stecker
- 7: Stecker
- 8: Loch
- 9: Loch
- 10: Kabeldurchführung (erfindungsgemäß)
- 11: erste Platte
- 12: zweite Platte
- 13: zweite Platte
- 14: Mittelteil
- 15: Lasche
- 16: Lasche
- 17: Lasche
- 18: Lasche
- 19: erster Au ßenrandabschnitt
- 20: erster Au ßenrandabschnitt
- 21: erste Ausbuchtung
- 22: erste Ausbuchtung
- 23: erste Ausbuchtung
- 24: erste Ausbuchtung
- 25: zweiter Au ßenrandabschnitt
- 26: zweite Ausbuchtung
- 27: zweite Ausbuchtung
- 28: zweite Ausbuchtung
- 29: zweite Ausbuchtung
- 30: Abkantung
- 31: Abkantung
- 32: Kabel
- 33: Loch
- 34: Loch
- 35: Loch
- 36: Loch
- 37: Kabel
- 38: Lochrandbereich
- 40: Blindnietmutter
- 40a: Fortsatz
- 41: Loch
- 42: Loch
- 43: Niet
- 44: Loch
- 50: Öffnung
- 51: Loch
- 52: Loch
- 53: Loch
- 54: Schutzschläuche
- 55: Kabelverschraubung
- 56: Knickschutzmuttern
- 57: Muttern
- 60: Kabeldurchführung
- 61: erste Platte
- 62: zweite Platte
- 63: zweite Platte
- 64: Loch/Aussparung
- 65: Außenrandabschnitt
- 66: Außenrandabschnitt
- 67: Steckergehäuse

## Patentansprüche

1. Kabeldurchführung (10; 60) oder Bausatz für eine Kabeldurchführung, aufweisend
- eine erste Platte (11), aufweisend zumindest einen ersten Außenrandabschnitt (19, 20),
- zumindest eine zweite Platte (12, 13), aufweisend einen zweiten Außenrandabschnitt (25),
wobei die erste und/oder die zweite Platte an ihrem Außenrandabschnitt zumindest eine erste Ausbuchtung (21, 22, 23, 24) aufweist,
wobei die erste Platte und die zweite Platte an dem ersten Außenrandabschnitt (20) und dem zweiten Außenrandabschnitt (25) aneinander stoßend so zusammensetzbar oder zusammengesetzt sind, dass durch die Ausbuchtung ein Loch (33, 34, 35, 36) gebildet wird oder ist,
wobei die erste Platte ein erstes Richtelement (15, 16, 17, 18) aufweist, welches bei dem Zusammensetzen der ersten Platte (11) und der zweiten Platte (12) derart mit der zweiten Platte (12) zusammen wirkt, dass die erste Platte und die zweite Platte zumindest in einem das Loch (33, 34, 35, 36) umgebenden Bereich einen ebenen Lochrandbereich (38) bilden,
wobei die erste Platte (11) zumindest eine zu ihrer Plattenebene parallel versetzte erste Lasche (17) als das erste Richtelement aufweist, die neben dem ersten Außenrandabschnitt (20) der ersten Platte angesetzt oder ausgeformt ist, wobei die erste Platte (11) und die zweite Platte (12) an der zumindest einen ersten Lasche (17) überlappend aneinander legbar oder aneinander gelegt sind,
wobei zumindest eine der zumindest einen ersten Lasche (17) ein zweites Richtelement (40, 40a) aufweist, welches mit einem dritten Richtelement (42), das an der zweiten Platte (12) ausgebildet ist, zusammen wirkt,
wobei
das zweite Richtelement (40, 40a) eine an der zumindest einen ersten Lasche (17) befestigte Blindnietmutter oder Gewindehülse ist und aus der zumindest einen ersten Lasche (17) zu einer ersten Seite der zumindest einen ersten Lasche hervorsteht, an welche die zweite Platte (12) an die zumindest eine erste Lasche (17) angelegt wird, wobei das zweite Richtelement (40, 40a) in eine Vertiefung oder in ein Loch (42) eingreift, welche(s) in der zweiten Platte (12) als das dritte Richtelement (42) gebildet ist,
oder
das dritte Richtelement eine an der zweiten Platte (12) befestigte Blindnietmutter oder Gewindehülse ist und aus der zweiten Platte (12) zu einer Seite der zweiten Platte (12) hervorsteht, an welche die zweite Platte (12) an die zumindest eine erste Lasche (17) angelegt wird, wobei das dritte Richtelement in eine Vertiefung oder in ein Loch eingreift, welche(s) in der zumindest einen ersten Lasche (17) als das zweite Richtelement gebildet ist.

2. Kabeldurchführung oder Bausatz für eine Kabeldurchführung nach Anspruch 1, wobei diejenige Platte, welche nicht die erste Ausbuchtung aufweist an ihrem Außenrand eine zweite Ausbuchtung (26, 27) aufweist, wobei die erste Ausbuchtung (23, 24) und die zweite Ausbuchtung (26, 27) sich zu einem Loch (33, 34) ergänzen, wenn die erste Platte und die zweite Platte zusammengesetzt sind.

3. Kabeldurchführung oder Bausatz für eine Kabeldurchführung nach einem der vorangehenden Ansprüche, wobei die erste Platte (11) eine zu ihrer Plattenebene parallel versetzte zweite Lasche (18) aufweist, die ebenfalls ein erstes Richtelement ist, und die neben dem ersten Außenrandabschnitt (20) der ersten Platte (11) angesetzt oder ausgeformt ist, sodass sich der erste Außenrandabschnitt (20) zwischen einer der zumindest einen ersten Lasche (17) und der zweiten Lasche (18) erstreckt, und wobei das Loch (33, 34) und der Lochrandbereich (38) zwischen den beiden Laschen (17, 18) angeordnet sind, wenn die erste und die zweite Platte zusammen gesetzt sind.

4. Kabeldurchführung oder Bausatz für eine Kabeldurchführung nach einem der vorangehenden Ansprüche, wobei der Längenbetrag, um den die Blindnietmutter oder Gewindehülse aus der zumindest einen ersten Lasche (17) hervorsteht, kleiner oder gleich ist wie die Dicke der zweiten Platte (12), oder wobei der Längenbetrag, um den die Blindnietmutter oder Gewindehülse aus der zweiten Platte, hervorsteht, kleiner oder gleich ist wie die Dicke der zumindest einen ersten Lasche (17).

5. Kabeldurchführung oder Bausatz für eine Kabeldurchführung nach einem der vorangehenden Ansprüche, wobei die erste und/oder die zweite Platte eine als Abkantung (30, 31) in der Platte ausgeformte Versteifung aufweisen.

6. Zusammenbau einer Kabeldurchführung, aufweisend eine Kabeldurchführung (10) nach einem der Ansprüche 1 bis 5, und ein Kabel (32, 37), das durch das Loch (33, 35) der Kabeldurchführung geführt ist und mit einem Befestigungsmittel, das an dem ebenen Lochrandbereich anliegt, an der Kabeldurchführung befestigt ist.

7. Schienenfahrzeug, aufweisend eine Kabeldurchführung (10; 60) nach einem der Ansprüche 1 bis 5 oder einen Zusammenbau nach Anspruch 6.

8. Schienenfahrzeug nach Anspruch 7, wobei die Kabeldurchführung mit einer Verschraubung über die Blindnietmutter (40) oder die Gewindehülse an dem Schienenfahrzeug befestigt ist, wobei durch die Verschraubung auch die erste Platte (11) und die zweite Platte (12) aneinander fixiert sind.

9. Verfahren zur Herstellung eines Zusammenbaus aus einer Kabeldurchführung (10; 60) und eines Kabels, aufweisend:
a) Bereitstellen eines Bausatzes für eine Kabeldurchführung, aufweisend
- eine erste Platte (11), aufweisend zumindest einen ersten Außenrandabschnitt (19, 20),
- zumindest eine zweite Platte (12, 13), aufweisend einen zweiten Außenrandabschnitt (25),
wobei die erste und/oder die zweite Platte an ihrem Außenrandabschnitt zumindest eine erste Ausbuchtung (21, 22, 23, 24) aufweist,
b) Einlegen eines Kabels in die erste Ausbuchtung,
c) Zusammensetzen der ersten und der zweiten Platte an dem ersten Außenrandabschnitt (20) und dem zweiten Außenrandabschnitt (25) aneinander stoßend, sodass durch die Ausbuchtung ein Loch (33, 34, 35, 36) gebildet wird, welches das Kabel umrandet und durch welches das Kabel verläuft,
wobei die erste Platte ein erstes Richtelement (15, 16, 17, 18) aufweist, welches bei dem Zusammensetzen der ersten Platte (11) und der zweiten Platte (12) derart mit der zweiten Platte (12) zusammen wirkt, dass die erste Platte (11) und die zweite Platte (12) zumindest in einem das Loch (33, 34, 35, 36) umgebenden Bereich einen ebenen Lochrandbereich (38) bilden,
wobei die erste Platte zumindest eine zu ihrer Plattenebene parallel versetzte erste Lasche (17) als das erste Richtelement aufweist, die neben dem ersten Außenrandabschnitt (20) der ersten Platte angesetzt oder ausgeformt ist, wobei die erste Platte (11) und die zweite Platte (12) an der zumindest einen ersten Lasche (17) überlappend aneinander gelegt werden,
wobei die zumindest eine erste Lasche (17) ein zweites Richtelement (40, 40a) aufweist, welches mit einem dritten Richtelement (42), das an der zweiten Platte (12) ausgebildet ist, zusammen wirkt und
**dadurch gekennzeichnet, dass**
das zweite Richtelement (40, 40a) eine an der zumindest einen ersten Lasche (17) befestigte Blindnietmutter oder Gewindehülse ist und aus der zumindest einen ersten Lasche (17) zu einer ersten Seite der zumindest einen ersten Lasche hervorsteht, an welche die zweite Platte (12) an die zumindest eine erste Lasche (17) angelegt wird, wobei das zweite Richtelement (40, 40a) in eine Vertiefung oder in ein Loch (42) eingreift, welche(s) in der zweiten Platte (12) als das dritte Richtelement (42) gebildet ist,
oder
das dritte Richtelement eine an der zweiten Platte (12) befestigte Blindnietmutter oder Gewindehülse ist und aus der zweiten Platte (12) zu einer Seite der zweiten Platte (12) hervorsteht, an welche die zweite Platte (12) an die zumindest eine erste Lasche (17) angelegt wird, wobei das dritte Richtelement in eine Vertiefung oder in ein Loch eingreift, welche(s) in der zumindest einen ersten Lasche (17) als das zweite Richtelement gebildet ist.

## Claims

1. Cable feedthrough (10; 60) or kit for a cable feedthrough, comprising
- a first plate (11) having at least one first outer edge section (19, 20),
- at least one second plate (12, 13) having a second outer edge section (25),
wherein the first and/or the second plate has at least one first indentation (21, 22, 23, 24) on its outer edge section, wherein the first plate and the second plate can be or are assembled in a manner abutting one another at the first outer edge section (20) and the second outer edge section (25) such that a hole (33, 34, 35, 36) is formed by the indentation,
wherein the first plate has a first aligning element (15, 16, 17, 18) which, when the first plate (11) and the second plate (12) are assembled, interacts with the second plate (12) such that the first plate and the second plate form a planar hole edge region (38) at least in a region surrounding the hole (33, 34, 35, 36),
wherein the first plate (11) has as the first aligning element at least one first tab (17) which is offset parallel to its plate plane and which is attached or formed next to the first outer edge section (20) of the first plate, wherein the first plate (11) and the second plate (12) can be or are placed against one another so as to overlap at the at least one first tab (17), wherein at least one the at least one first tab (17) has a second aligning element (40, 40a) which interacts with a third aligning element (42) that is formed on the second plate (12),
wherein the second aligning element (40, 40a) is a blind rivet nut or threaded sleeve which is fastened to the at least one first tab (17) and projects from the at least one first tab (17) on a first side of the at least one first tab at which the second plate (12) is placed against the at least one first tab (17), wherein the second aligning element (40, 40a) engages in a depression or in a hole (42) that is formed as the third aligning element (42) in the second plate (12),
or
the third aligning element is a blind rivet nut or threaded sleeve which is fastened to the second plate (12) and projects from the second plate (12) on a side of the second plate (12) at which the second plate (12) is placed against the at least one first tab (17), wherein the third aligning element engages in a depression or in a hole that is formed as the second aligning element in the at least one first tab (17).

2. Cable feedthrough or kit for a cable feedthrough according to claim 1, wherein the plate that does not have the first indentation has a second indentation (26, 27) on its outer edge, wherein the first indentation (23, 24) and the second indentation (26, 27) join together to form a hole (33, 34) when the first plate and the second plate are assembled.

3. Cable feedthrough or kit for a cable feedthrough according to any one of the preceding claims, wherein the first plate (11) has a second tab (18) which is offset parallel to its plate plane, which second tab is likewise a first aligning element and is attached or formed next to the first outer edge section (20) of the first plate (11) such that the first outer edge section (20) extends between a the at least one first tab (17) and the second tab (18), and wherein the hole (33, 34) and the hole edge region (38) are arranged between the two tabs (17, 18) when the first and the second plate are assembled.

4. Cable feedthrough or kit for a cable feedthrough according to any one of the preceding claims, wherein the length by which the blind rivet nut or threaded sleeve projects from the at least one first tab (17) is less than or equal to the thickness of the second plate (12), or wherein the length by which the blind rivet nut or threaded sleeve projects from the second plate is less than or equal to the thickness of the at least one first tab (17).

5. Cable feedthrough or kit for a cable feedthrough according to any one of the preceding claims, wherein the first and/or the second plate have a stiffening formed as a bent-over edge (30, 31) in the plate.

6. Assembly consisting of a cable feedthrough, comprising a cable feedthrough (10) according to any one of claims 1 to 5, and a cable (32, 37) which is passed through the hole (33, 35) of the cable feedthrough and is fastened to the cable feedthrough by a fastening means that bears against the planar hole edge region.

7. Rail vehicle, having a cable feedthrough (10; 60) according to any one of claims 1 to 5 or an assembly according to claim 6.

8. Rail vehicle according to claim 7, wherein the cable feedthrough is fastened to the rail vehicle by a screw connection via the blind rivet nut (40) or the threaded sleeve, wherein the first plate (11) and the second plate (12) are also fixed to one another by the screw connection.

9. Method for producing an assembly consisting of a cable feedthrough (10; 60) and a cable, which comprises:
a) providing a kit for a cable feedthrough, comprising
- a first plate (11) having at least one first outer edge section (19, 20),
- at least one second plate (12, 13) having a second outer edge section (25),
wherein the first and/or the second plate has at least one first indentation (21, 22, 23, 24) on its outer edge section,
b) placing a cable in the first indentation,
c) assembling the first and the second plate in a manner abutting one another at the first outer edge section (20) and the second outer edge section (25) such that a hole (33, 34, 35, 36) is formed by the indentation, the hole encircling the cable and the cable extending through the hole,
wherein the first plate has a first aligning element (15, 16, 17, 18) which, when the first plate (11) and the second plate (12) are assembled, interacts with the second plate (12) such that the first plate (11) and the second plate (12) form a planar hole edge region (38) at least in a region surrounding the hole (33, 34, 35, 36),
wherein the first plate has as the first aligning element at least one first tab (17) which is offset parallel to its plate plane and which is attached or formed next to the first outer edge section (20) of the first plate, wherein the first plate (11) and the second plate (12) are placed against one another so as to overlap at the at least one first tab (17),
wherein the at least one first tab (17) has a second aligning element (40, 40a) which interacts with a third aligning element (42) that is formed on the second plate (12), and
**characterized in that**
the second aligning element (40, 40a) is a blind rivet nut or threaded sleeve which is fastened to the at least one first tab (17) and projects from the at least one first tab (17) on a first side of the at least one first tab at which the second plate (12) is placed against the at least one first tab (17), wherein the second aligning element (40, 40a) engages in a depression or in a hole (42) that is formed as the third aligning element (42) in the second plate (12),
or
the third aligning element is a blind rivet nut or threaded sleeve which is fastened to the second plate (12) and projects from the second plate (12) on a side of the second plate (12) at which the second plate (12) is placed against the at least one first tab (17), wherein the third aligning element engages in a depression or in a hole that is formed as the second aligning element in the at least one first tab (17) .

## Revendications

1. Passage de câble (10 ; 60) ou kit pour un passage de câble, présentant
- une première plaque (11), présentant au moins une première partie de bord extérieur (19, 20),
- au moins une deuxième plaque (12, 13), présentant une deuxième partie de bord extérieur (25),
dans laquelle la première et/ou la deuxième plaque présente sur sa partie de bord extérieur au moins un premier renflement (21, 22, 23, 24),
dans laquelle la première plaque et la deuxième plaque peuvent être assemblées ou sont assemblées en aboutement sur la première partie de bord extérieur (20) et la deuxième partie de bord extérieur (25), de sorte qu'un trou (33, 34, 35, 36) devient ou est formé par le renflement,
dans laquelle la première plaque présente un premier élément d'orientation (15, 16, 17, 18), lequel coopère avec la deuxième plaque (12) lors de l'assemblage de la première plaque (11) et de la deuxième plaque (12), de telle sorte que la première plaque et la deuxième plaque forment une zone de bord de trou (38) plane au moins dans une zone entourant le trou (33, 34, 35, 36),
dans laquelle la première plaque (11) présente au moins une première languette (17) décalée parallèlement par rapport à son plan de plaque en tant que le premier élément d'orientation, qui est appliquée ou conformée à côté de la première partie de bord extérieur (20) de la première plaque, dans laquelle la première plaque (11) et la deuxième plaque (12) peuvent être mises l'une à côté de l'autre ou sont mises l'une à côté de l'autre de manière à se chevaucher sur l'au moins une première languette (17), dans laquelle au moins une de l'au moins une première languette (17) présente un deuxième élément d'orientation (40, 40a), lequel coopère avec un troisième élément d'orientation (42), qui est réalisé sur la deuxième plaque (12),
dans laquelle
le deuxième élément d'orientation (40, 40a) est un(e) écrou-rivet aveugle ou douille filetée fixé(e) sur l'au moins une première languette (17) et fait saillie de l'au moins une première languette (17) vers un premier côté de l'au moins une première languette sur lequel la deuxième plaque (12) est placée sur l'au moins une première languette (17), dans laquelle le deuxième élément d'orientation (40, 40a) s'insère dans un évidement ou dans un trou (42), lequel est formé dans la deuxième plaque (12) en tant que le troisième élément d'orientation (42),
ou
le troisième élément d'orientation est un(e) écrou-rivet aveugle ou douille filetée fixé(e) sur la deuxième plaque (12) et fait saillie de la deuxième plaque (12) vers un côté de la deuxième plaque (12) sur lequel la deuxième plaque (12) est placée sur l'au moins une première languette (17), dans laquelle le troisième élément d'orientation s'insère dans un évidement ou dans un trou, lequel est formé dans l'au moins une première languette (17) en tant que le deuxième élément d'orientation.

2. Passage de câble ou kit pour un passage de câble selon la revendication 1, dans laquelle la plaque laquelle ne présente pas le premier renflement présente sur son bord extérieur un deuxième renflement (26, 27), dans laquelle le premier renflement (23, 24) et le deuxième renflement (26, 27) se complètent en un trou (33, 34), lorsque la première plaque et la deuxième plaque sont assemblées.

3. Passage de câble ou kit pour un passage de câble selon l'une quelconque des revendications précédentes, dans laquelle la première plaque (11) présente une deuxième languette (18) décalée parallèlement par rapport à son plan de plaque, qui est également un premier élément d'orientation, et qui est appliquée ou conformée à côté de la première partie de bord extérieur (20) de la première plaque (11), de sorte que la première partie de bord extérieur (20) s'étend entre une de l'au moins une première languette (17) et de la deuxième languette (18), et dans laquelle le trou (33, 34) et la zone de bord de trou (38) sont disposés entre les deux languettes (17, 18), lorsque la première et la deuxième plaque sont assemblées.

4. Passage de câble ou kit pour un passage de câble selon l'une quelconque des revendications précédentes, dans laquelle la valeur de longueur de laquelle l'écrou-rivet aveugle ou la douille filetée fait saillie de l'au moins une première languette (17) est inférieure ou égale à l'épaisseur de la deuxième plaque (12), ou dans laquelle la valeur de longueur de laquelle l'écrou-rivet aveugle ou la douille filetée fait saillie de la deuxième plaque est inférieure ou égale à l'épaisseur de l'au moins une première languette (17).

5. Passage de câble ou kit pour un passage de câble selon l'une quelconque des revendications précédentes, dans laquelle la première et/ou la deuxième plaque présentent un renforcement conformé en tant que chanfrein (30, 31) dans la plaque.

6. Assemblage d'un passage de câble, présentant un passage de câble (10) selon l'une quelconque des revendications 1 à 5, et un câble (32, 37), qui est guidé à travers le trou (33, 35) du passage de câble et est fixé sur le passage de câble avec un moyen de fixation, qui repose sur la zone de bord de trou plate.

7. Véhicule ferroviaire, présentant un passage de câble (10 ; 60) selon l'une quelconque des revendications 1 à 5 ou un assemblage selon la revendication 6.

8. Véhicule ferroviaire selon la revendication 7, dans lequel le passage de câble est fixée sur le véhicule ferroviaire avec un vissage par l'intermédiaire de l'écrou-rivet aveugle (40) ou de la douille filetée, dans lequel la première plaque (11) et la deuxième plaque (12) sont également fixées l'une sur l'autre par le vissage.

9. Procédé pour fabriquer un assemblage composé d'un passage de câble (10 ; 60) et d'un câble, présentant :
a) la fourniture d'un kit pour un passage de câble, présentant
- une première plaque (11), présentant au moins une première partie de bord extérieur (19, 20),
- au moins une deuxième plaque (12, 13), présentant une deuxième partie de bord extérieur (25),
dans lequel la première et/ou la deuxième plaque présente sur sa partie de bord extérieur au moins un premier renflement (21, 22, 23, 24),
b) l'insertion d'un câble dans le premier renflement,
c) l'assemblage de la première et de la deuxième plaque sur la première partie de bord extérieur (20) et la deuxième partie de bord extérieur (25) en aboutement, de sorte qu'un trou (33, 34, 35, 36) est formé par le renflement, lequel entoure le câble et à travers lequel le câble s'étend,
dans lequel la première plaque présente un premier élément d'orientation (15, 16, 17, 18), lequel coopère avec la deuxième plaque (12) lors de l'assemblage de la première plaque (11) et de la deuxième plaque (12), de telle sorte que la première plaque (11) et la deuxième plaque (12) forment une zone de bord de trou (38) plane au moins dans une zone entourant le trou (33, 34, 35, 36),
dans lequel la première plaque présente au moins une première languette (17) décalée parallèlement par rapport à son plan de plaque en tant que le premier élément d'orientation, qui est appliquée ou conformée à côté de la première partie de bord extérieur (20) de la première plaque, dans lequel la première plaque (11) et la deuxième plaque (12) sont mises l'une à côté de l'autre de manière à se chevaucher sur l'au moins une première languette (17), dans lequel l'au moins une première languette (17) présente un deuxième élément d'orientation (40, 40a), lequel coopère avec un troisième élément d'orientation (42), qui est réalisé sur la deuxième plaque (12) et
**caractérisé en ce que**
le deuxième élément d'orientation (40, 40a) est un écrou-rivet aveugle ou une douille filetée fixé (e) sur l'au moins une première languette (17) et fait saillie de l'au moins une première languette (17) vers un premier côté de l'au moins une première languette sur lequel la deuxième plaque (12) est placée sur l'au moins une première languette (17), dans lequel le deuxième élément d'orientation (40, 40a) s'insère dans un évidement ou dans un trou (42), lequel est formé dans la deuxième plaque (12) en tant que le troisième élément d'orientation (42),
ou
le troisième élément d'orientation est un(e) écrou-rivet aveugle ou douille filetée fixé(e) sur la deuxième plaque (12) et fait saillie de la deuxième plaque (12) vers un côté de la deuxième plaque (12) sur lequel la deuxième plaque (12) est placée sur l'au moins une première languette (17), dans lequel le troisième élément d'orientation s'insère dans un évidement ou dans un trou, lequel est formé dans l'au moins une première languette (17) en tant que le deuxième élément d'orientation.
